(19) Europäisches Patentamt / European Patent Office / Office européen des brevets

(11) **EP 3 985 536 B1**

(12) **EUROPEAN PATENT SPECIFICATION**

(45) Date of publication and mention
of the grant of the patent:
**14.12.2022 Bulletin 2022/50**

(51) International Patent Classification (IPC):
**G06F 21/56** (2013.01)     **G06N 20/00** (2019.01)
**G06N 3/08** (2006.01)

(21) Application number: **21189089.2**

(52) Cooperative Patent Classification (CPC):
**G06F 21/568; G06N 20/00;** G06N 3/08

(22) Date of filing: **02.08.2021**

(54) **INFORMATION PROCESSING PROGRAM, METHOD OF PROCESSING INFORMATION, AND INFORMATION PROCESSING DEVICE**

INFORMATIONSVERARBEITUNGSPROGRAMM, VERFAHREN ZUR VERARBEITUNG VON INFORMATIONEN UND INFORMATIONSVERARBEITUNGSVORRICHTUNG

PROGRAMME DE TRAITEMENT D'INFORMATIONS, PROCÉDÉ DE TRAITEMENT D'INFORMATIONS ET DISPOSITIF DE TRAITEMENT D'INFORMATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.10.2020 JP 2020174337**

(43) Date of publication of application:
**20.04.2022 Bulletin 2022/16**

(73) Proprietor: **FUJITSU LIMITED**
**Kanagawa 211-8588 (JP)**

(72) Inventor: **Kokubo, Hirotaka**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(56) References cited:
- **DEMONTIS AMBRA ET AL: "Yes, Machine Learning Can Be More Secure! A Case Study on Android Malware Detection", IEEE TRANSACTIONS ON DEPENDABLE AND SECURE COMPUTING, IEEE SERVICE CENTER, NEW YORK, NY, US, vol. 16, no. 4, 1 July 2019 (2019-07-01), pages 711-724, XP011734453, ISSN: 1545-5971, DOI: 10.1109/TDSC.2017.2700270 [retrieved on 2019-07-08]**
- **Lisin N. ET AL: "Methods and Approaches for Privacy-Preserving Machine Learning : Proceedings of ITR 2019" In: "Mechanisms, Transmissions and Applications", 1 January 2020 (2020-01-01), Erwin-Christian Lovasz, Burkhard Corves, Dordrecht, Netherlands, XP055879793, ISSN: 2211-0984 ISBN: 978-94-007-2726-7 vol. 80, pages 141-148, DOI: 10.1007/978-3-030-33491-8_17, Retrieved from the Internet: URL:http://link.springer.com/content/pdf/10.1007/978-3-030-33491-8_17> * paragraph [02.2] ***
- **FEI ZHENG: "Efficient Private Machine Learning by Differentiable Random Transformations", ARXIV.ORG, CORNELL UNIVERSITY LIBRARY, 201 OLIN LIBRARY CORNELL UNIVERSITY ITHACA, NY 14853, 18 August 2020 (2020-08-18), XP081743234,**

EP 3 985 536 B1

**Description**

FIELD

The embodiments discussed herein are related to an information processing program, a method of processing information, and an information processing device.

BACKGROUND

Machine learning is one of information analysis techniques using a computer. By using the machine learning, for example, a model for classification of malware or determination of benignity/maliciousness may be created. Malware is a generic name for malicious software or codes. Examples of the malware include computer viruses, worms, Trojan horses, and so forth. For example, when the malware is input to the computer as the learning data (may be referred to as "machine learning data" or "training data") and the computer executes the machine learning, a learned model is generated.

As an anti-malware technique, for example, a security information analysis device capable of efficiently collecting useful information on security has been proposed. There has also been proposed a network protection device capable of improving a security level while realizing non-stop operation of a terminal included in a communication network and minimization of a communication delay. There has also been proposed a malware inferring device capable of more accurately inferring whether infection with malware occurs.

Examples of the related art include as follows: International Publication Pamphlet No. WO 2020/152845 and Japanese Laid-open Patent Publication Nos. 2019-213182 and 2016-38721.

Further related teachings can be found from the following documents DEMONTIS AMBRA ET AL: "Yes, Machine Learning Can Be More Secure! A Case Study on Android Malware Detection", IEEE TRANSACTIONS ON DEPENDABLE AND SECURE COMPUTING, IEEE SERVICE CENTER, NEW YORK, NY, US, vol. 16, no. 4, 1 July 2019 (2019-07-01), pages 711-724;

Lisin N. ET AL: "Methods and Approaches for Privacy-Preserving Machine Learning : Proceedings of ITR 2019 "In: "Mechanisms, Transmissions and Applications", 1 January 2020 (2020-01-01), Erwin-Christian Lovasz, Burkhard Corves, Dordrecht, Netherlands; and

FEI ZHENG: "Efficient Private Machine Learning by Differentiable Random Transformations",ARXIV.ORG, CORNELL UNIVERSITY LIBRARY, 201 OLIN LIBRARY CORNELL UNIVERSITY ITHACA, NY 14853, 18 August 2020 (2020-08-18).

However, according to the related art, since the malware is used for the machine learning as it is, the computer that performs the machine learning is exposed to the risk of attack using the malware.

In one aspect, an object of the present disclosure is to improve security during machine learning in which malware is used.

According to the one aspect, security during the machine learning in which the malware is used may be improved.

SUMMARY

According to an aspect of the embodiments, the present invention relates to an information processing program including instructions which, when the program is executed by a computer, cause the computer to perform processing, the processing including: generating post-replacement data by replacing values, with other values, of individual unit data pieces, which have a predetermined data length, of malware in accordance with a replacement rule by which replacement is performed in bijective relationships on a unit data piece basis while a predetermined characteristic indicated in the malware is maintained; and generating, based on the post-replacement data, learning data (may be referred to as "machine learning data" or "training data") to be used for machine learning in which the predetermined characteristic is used.

The object and advantages of the invention will be realized and attained by means of the elements and combinations particularly pointed out in the claims.

It is to be understood that both the foregoing general description and the following detailed description are exemplary and explanatory and are not restrictive of the invention.

BRIEF DESCRIPTION OF DRAWINGS

FIG. 1 illustrates an example of a method of processing information according to a first embodiment;

FIG. 2 illustrates an example of a system configuration according to a second embodiment;
FIG. 3 illustrates an example of hardware of a computer;
FIG. 4 illustrates an example of data conversion performed on the malware;
FIG. 5 is a block diagram illustrating examples of the functions for safely for using the malware for machine learning;
FIG. 6 illustrates a first example of data replacement in bytes;
FIG. 7 illustrates a second example of the data replacement in bytes;
FIG. 8 is a flowchart illustrating an example of a procedure of data replacement processing;
FIG. 9 illustrates a comparative example of the Hamming distance before and after the replacement;
FIG. 10 illustrates a comparative example of an absolute value of differences in value between two arbitrary bytes before and after the replacement;
FIG. 11 illustrates an example of imaged binary data;
FIG. 12 illustrates an example of a method of replacement of an ASCII printable character range; and
FIG. 13 is a flowchart illustrating an example of a replacement procedure of the ASCII printable character range.

DESCRIPTION OF EMBODIMENTS

Hereinafter, embodiments will be described with reference to the drawings. The embodiments may be implemented by combining a plurality of the embodiments to the degree with which no inconsistency is caused.

[First Embodiment]

First, a first embodiment related to a method of processing information for improving security during machine learning in which malware is used will be described.

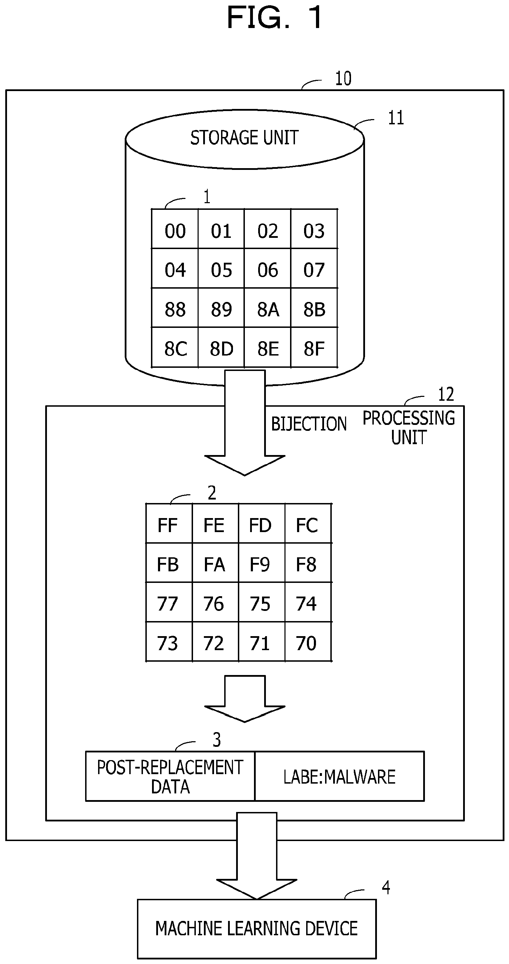

FIG. 1 illustrates an example of a method of processing information according to the first embodiment. FIG. 1 illustrates an information processing device 10 that performs the method of processing information for improving security during the machine learning in which malware is used. The information processing device 10 may perform the method of processing information by executing an information processing program in which a predetermined processing procedure is described.

The information processing device 10 includes a storage unit 11 and a processing unit 12 to realize the above-described method of processing information. The storage unit 11 is, for example, a storage device or a memory included in the information processing device 10. The processing unit 12 is, for example, a processor or an arithmetic circuit included in the information processing device 10.

The storage unit 11 stores malware 1. The malware 1 is, for example, binary data.

The processing unit 12 generates post-replacement data 2 by replacing values, with other values, of individual unit data pieces of the malware 1 that have a predetermined data length in accordance with a replacement rule by which replacement is performed in bijective relationships on a unit data piece basis while maintaining the predetermined characteristics indicated in the malware 1. The data length of the unit data piece is, for example, a single byte. The bijection is a mapping in which, for an arbitrary element of a set being a codomain, only one element the image of which is the element in the codomain exists in a set that is the domain of the mapping. Based on the post-replacement data 2, the processing unit 12 generates learning data 3 (may be referred to as "machine learning data 3" or "training data 3") to be used for the machine learning in which the predetermined characteristics are used. For example, the processing unit 12 generates the learning data 3 by assigning a label indicating an attribute of the malware 1 to the post-replacement data 2.

The learning data 3 generated by the information processing device 10 is transmitted to, for example, a machine learning device 4. The machine learning device 4 executes the machine learning by using the predetermined characteristics of the malware 1 maintained in the post-replacement data 2. This generates a model for classification of software or determination of benignity/maliciousness.

By replacing the values of the malware 1 by the bijection on a unit data piece basis in this manner, a program described in the malware 1 becomes unable to be executed. Thus, even when the post-replacement data 2 is transmitted to the machine learning device 4, a situation in which the machine learning device 4 is compromised by the program described in the malware 1 is suppressed.

In the machine learning device 4, antivirus software may be executed. In the antivirus software, a subset of codes of the malware 1 may be defined as a signature. However, in the learning data 3, a code included in the malware 1 is replaced and does not match the signature defined in the antivirus software. Thus, even when the antivirus software is executed in the machine learning device 4, deletion of the learning data 3 due to work of the antivirus software is suppressed.

As described above, although the function of the learning data 3 as the program in the malware 1 is stopped and the code corresponding to the signature is also destructed, specific characteristics used in the machine learning are maintained. Thus, the learning data 3 may be appropriately used for the machine learning as data representing the malware 1. As a result, when the learning data 3 converted from the malware 1 is used for the machine learning, security during the machine learning may be improved.

Examples of the characteristics of the malware 1 maintained here include, for example, the Hamming distance between two arbitrary unit data pieces. Examples of a replacement rule with the Hamming distance maintained include, for example, exclusive ORing the unit data to be replaced and an arbitrary data string. In this case, for each of the unit data pieces of the malware 1, the processing unit 12 performs a bit-by-bit exclusive OR operation on a bit string having a predetermined data length and the unit data piece so as to replace the value of the unit data piece of the malware 1 with the other value. When the replacement with the bit-by-bit exclusive OR is performed, the Hamming distance between two arbitrary unit data pieces is maintained even after the replacement. When the Hamming distance is maintained, the generated learning data 3 may be effectively used for the machine learning in which the Hamming distance between the unit data pieces is used.

In the bit string used for the exclusive OR, it is sufficient that the value of at least one bit be 1. For example, the processing unit 12 may use a bit string in which the values of all the bits are 1. In the case where the values of all the bits in the bit string are 1, the difference in value between two unit data pieces existing when the values of the unit data pieces in the malware 1 are regarded as numeric values is maintained as the characteristic of the malware 1 even after the replacement. When the difference in value between the unit data pieces is maintained, the generated learning data 3 may be effectively used for the machine learning in which the difference in value between the unit data pieces is used.

Examples of the characteristics of the malware 1 usable for the machine learning include, for example, the position and size of an area in the malware 1 in which codes of characters such as the American Standard Code for Information Interchange (ASCII) printable characters are described. The processing unit 12 may perform the replacement in which such a characteristic is maintained. For example, the processing unit 12 sets the data length for a single character in a predetermined character code system as a predetermined data length of the unit data. The processing unit 12 replaces the value of each of the character codes within a definition range of the predetermined character code system with a value within another continuous range having the same size as that of the definition range. Thus, the character codes in the malware 1 are replaced with the values within the continuous range. Accordingly, when the range of replacement target values is designated in the definition range of the character codes in the machine learning, the learning data 3 may be effectively used for the machine learning in which the position and size of the area in the malware 1 in which the character codes are described is used.

The processing unit 12 may perform the replacement in accordance with a replacement rule that maintains an order of the values of the character codes used in the malware 1. For example, the processing unit 12 replaces a value within the definition range of the character codes in the character code system with a value obtained by adding or subtracting a predetermined value to or from the value within the definition range. With this replacement rule, the replacement target values respectively corresponding to the continuous values of the character codes of the replacement source are also continuous values. Thus, when the malware 1 includes, for example, the character codes of "ABC" with continuous values, the post-replacement values corresponding to the character codes are also continuous values. When the replacement in which the order of the values of the character codes is maintained is performed, the generated learning data 3 may be effectively used for the machine learning with consideration for the order of the values of the character codes.

Also when the bit-by-bit exclusive OR operation is performed on the unit data for the individual character codes and a bit string in which all the bits are 1, arrangement of the values of the character codes is maintained despite reversal of the order of the values of the character codes.

[Second Embodiment]

Next, a second embodiment will be described.

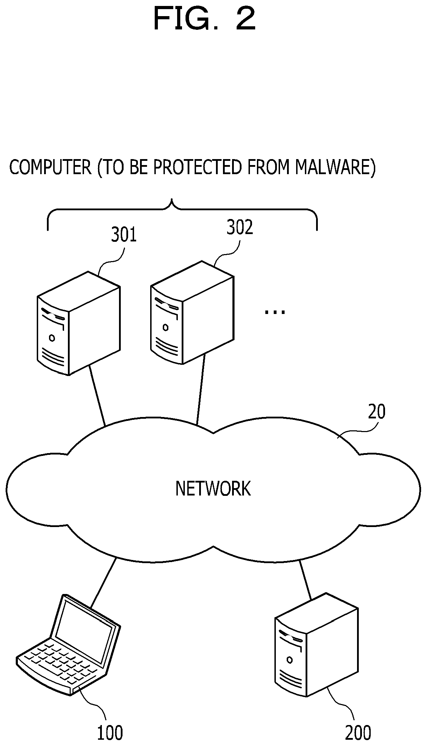

FIG. 2 illustrates an example of a system configuration according to the second embodiment. A plurality of computers 100, 200, 301, 302, ... are coupled to a network 20. The computer 100 is a computer for malware conversion. The computer 100 performs data conversion for using the malware as the learning data for the machine learning. In the data conversion of the malware, the computer 100 performs the conversion such that the malware is not executable while the predetermined characteristics of the malware is maintained.

The computer 200 is a computer for machine learning. The computer 200 performs supervised learning based on, for example, the malware and software other than the malware. The computer 200 performs the machine learning to generate a model to classify the malware (what types of the malware) or determine whether software is non-malware (benign) or malware (malicious). As a technique of the machine learning, for example, a neural network may be used.

The computers 301, 302, ... are computers to be protected from the malware. For example, malware used to attack the computers 301, 302, ... is collected for the machine learning and converted by the computer 100. The computer 301, 302, ... obtain the model generated by the computer 200 and detect the malware by using the obtained model.

Although the computer 100 is coupled to the network 20 in the example illustrated in FIG. 2, the computer 100 may be separated from the network 20. Since the computer 100 handles the malware before the malware is deactivated, separation of the computer 100 from the network 20 may suppress spread of damage when the computer 100 is attacked by the malware.

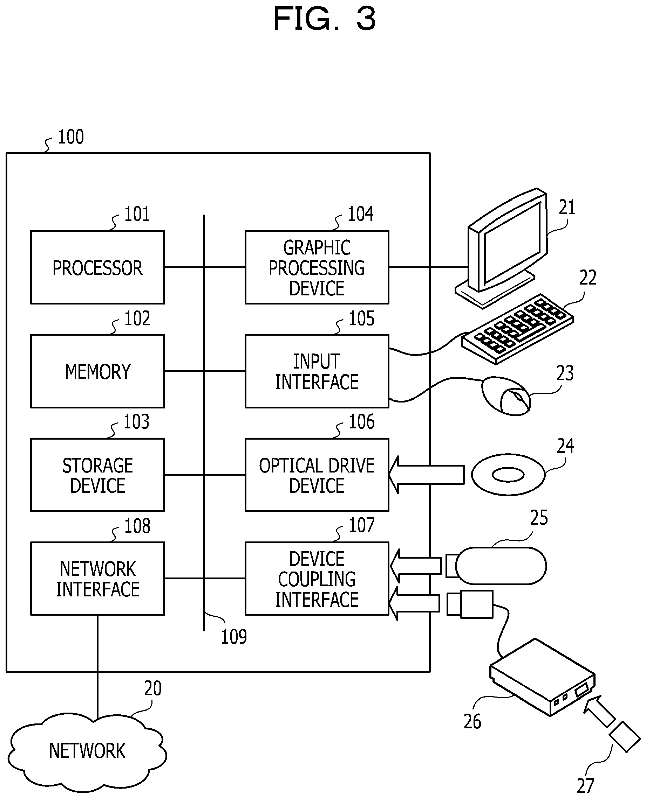

FIG. 3 illustrates an example of hardware of the computer. The entirety of the computer 100 is controlled by a processor 101. A memory 102 and a plurality of peripheral devices are coupled to the processor 101 via a bus 109. The processor 101 may be a multiprocessor. The processor 101 is, for example, a central processing unit (CPU), a microprocessor unit (MPU), or a digital signal processor (DSP). At least a subset of functions realized when the processor 101 executes a program may be realized by an electronic circuit such as an application-specific integrated circuit (ASIC) or a programmable logic device (PLD).

The memory 102 is used as a main storage of the computer 100. The memory 102 temporarily stores at least a subset of programs of an operating system (OS) and application programs to be executed by the processor 101. The memory 102 stores various types of data to be used in processing performed by the processor 101. As the memory 102, for example, a volatile semiconductor storage such as a random-access memory (RAM) is used.

The peripheral devices coupled to the bus 109 include a storage device 103, a graphic processing device 104, an input interface 105, an optical drive device 106, a device coupling interface 107, and a network interface 108.

The storage device 103 electrically or magnetically writes and reads data to and from a recording medium included therein. The storage device 103 is used as an auxiliary storage of the computer. The storage device 103 stores the program of the OS, the application programs, and the various types of data. As the storage device 103, for example, a hard disk drive (HDD) or a solid-state drive (SSD) may be used.

A monitor 21 is coupled to the graphic processing device 104. The graphic processing device 104 displays images on a screen of the monitor 21 in accordance with an instruction from the processor 101. Examples of the monitor 21 include a display device using organic electroluminescence (EL), a liquid crystal display device, and the like.

A keyboard 22 and a mouse 23 are coupled to the input interface 105. The input interface 105 transmits to the processor 101 signals transmitted from the keyboard 22 and the mouse 23. The mouse 23 is an example of a pointing device, and other pointing devices may be used. Examples of the other pointing devices include a touch panel, a tablet, a touch pad, a trackball, and the like.

The optical drive device 106 reads data recorded in an optical disc 24 or writes data to the optical disc 24 by using a laser beam or the like. The optical disc 24 is a portable recording medium in which data is recorded such that the data is readable through reflection of light. Examples of the optical disc 24 include a Digital Versatile Disc (DVD), a DVD-RAM, a compact disc read-only memory (CD-ROM), a CD-recordable (CD-R), a CD-rewritable (CD-RW), and the like.

The device coupling interface 107 is a communication interface for coupling the peripheral devices to the computer 100. For example, a memory device 25 and a memory reader/writer 26 may be coupled to the device coupling interface 107. The memory device 25 is a recording medium in which the function of communication with the device coupling interface 107 is provided. The memory reader/writer 26 is a device that writes data to a memory card 27 or reads data from the memory card 27. The memory card 27 is a card-type recording medium.

The network interface 108 is coupled to the network 20. The network interface 108 transmits and receives data to and from another computer or a communication device via the network 20. The network interface 108 is, for example, a wired communication interface that is coupled to a wired communication device such as a switch or a router by a cable. The network interface 108 may be a wireless communication interface that is coupled, by radio waves, to and communicates with a wireless communication device such as a base station or an access point.

With the hardware as described above, the computer 100 may realize processing functions of the second embodiment. The other computers 200, 301, 302, ... may also be realized by hardware similar to that of the computer 100. The information processing device 10 described according to the first embodiment may also be realized by hardware similar to that of the computer 100.

For example, the computer 100 realizes the processing functions of the second embodiment by executing a program recorded in a computer-readable recording medium. A program in which the content of processing to be executed by the computer 100 is described may be recorded in any of various recording media. For example, a program to be executed by the computer 100 may be stored in the storage device 103. The processor 101 loads at least part of the program in the storage device 103 to the memory 102 and executes the program. The program to be executed by the computer 100 may be recorded in a portable recording medium such as the optical disc 24, the memory device 25, or the memory card 27. The program stored in the portable recording medium may be executed after the program has been installed in the storage device 103 under the control of the processor 101, for example. The processor 101 may read the program directly from the portable recording medium and execute the program.

With the hardware illustrated in FIG. 3, the computer 100 converts the malware so that the malware may be safely used for the machine learning. Hereinafter, the importance of the conversion will be described.

To create the model that detects the malware by the machine learning, the malware used as the learning data is input to the computer 200 in which the machine learning is performed. When the malware is input to the computer 200 without the conversion performed by the computer 100, the following problems occur.

A first problem is that there is a risk of erroneous execution of the malware in the computer 200. When the computer 200 erroneously executes the malware, the computer 200 is infected with the malware. Furthermore, since there are a large number of types of the malware, the malware for all platforms exists. Thus, it is difficult to prepare a platform on which the malware does not operate at all.

The second problem is that interference by the antivirus software may occur. When the antivirus software is introduced into the computer 200, the malware input as the learning data is discarded by work of the antivirus software. Although exclusion may be set for the antivirus software so as not to discard the malware, there remains the risk of erroneous execution of the malware when the exclusion is set. Furthermore, when the exclusion is set, in the case where a different type of the malware from that of the learning data is input, the computer 200 is not protected and is infected with the malware.

Thus, according to the second embodiment, the computer 100 is used to perform such data conversion that the data conversion does not to allow execution of the malware. In so doing, to use the malware for the machine learning, it is demanded that the characteristics of the malware be maintained even after the conversion. For example, the computer 100 performs replacement on individual byte values of the malware used as sample data for the machine learning such that the replacement does not affect the machine learning.

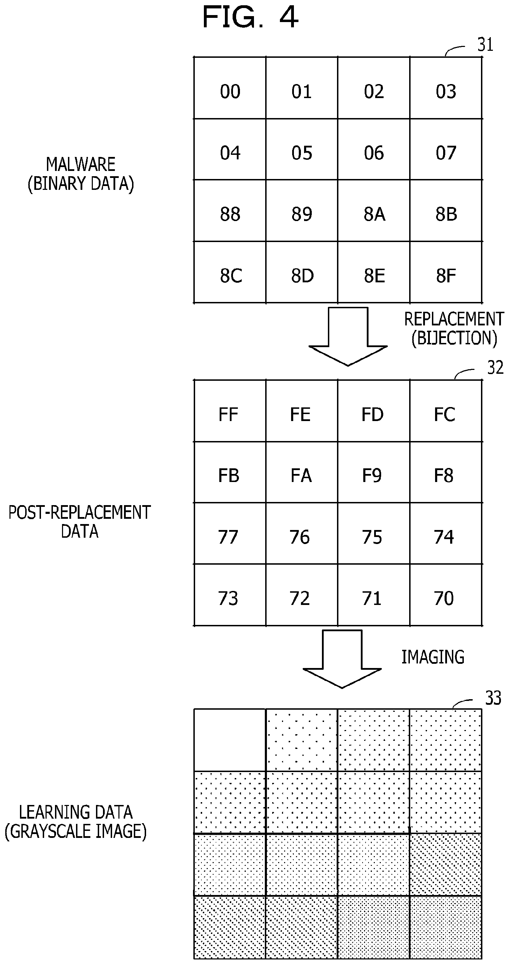

FIG. 4 illustrates an example of the data conversion performed on the malware. The computer 100 replaces malware 31 represented by binary data in bytes. The replacement is performed by bijection. In the bijection, a value of a single byte of the source of the conversion and a value of a single byte of the target of the conversion are in a one-to-one correspondence.

The computer 100 images post-replacement data 32 having undergone the replacement in bytes into, for example, a grayscale image. In the conversion into the image, the value of each byte of the post-replacement data 32 becomes a luminance value of 256 levels of gray. The converted grayscale image data becomes learning data 33 for the machine learning.

When the malware 31 is converted as described above, erroneous execution of the malware 31 in the computer 200 may be suppressed. In addition, when all the values are replaced in bytes, the bit string of the code used as the signature in the antivirus software is also converted. Thus, the discarding by the antivirus software may be suppressed. Furthermore, since the replacement is performed by bijection, the characteristics of the malware 31 may be reflected in the learning data 33.

Examples of a data conversion technique for software and the like include encryption and data compression. However, basically, these techniques do not perform bijection in bytes. Accordingly, the characteristics of the malware do not remain in post-conversion encrypted text or the post-conversion compressed data generated by performing the conversion of the encryption or the data compression on the malware. When decryption of the encrypted text or a decompressing process of the compressed data is performed in the computer 200 that performs the machine learning, the characteristics of the malware may be reproduced. In this case, however, executable malware is generated, and the security of the computer 200 that performs the machine learning is damaged.

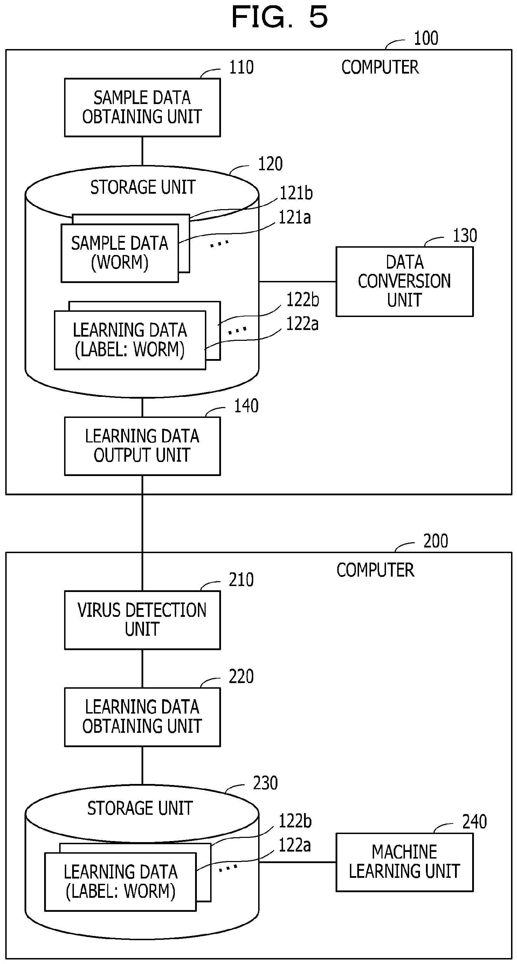

FIG. 5 is a block diagram illustrating examples of the functions for safely using the malware for the machine learning. The computer 100 for malware conversion includes a sample data obtaining unit 110, a storage unit 120, a data conversion unit 130, and a learning data output unit 140.

The sample data obtaining unit 110 obtains the sample data to be used as a sample in the machine learning. The sample data includes the malware and software other than the malware (non-malware). For example, the sample data obtaining unit 110 obtains, from the computers 301, 302, ..., as the sample data, files of software determined as the malware by virus detection software or the like. The sample data obtaining unit 110 also obtains, from the computers 301, 302, ..., as the sample data, files of the non-malware having been verified that the software is not the malware.

When the computer 100 is separated from the network 20, the sample data obtaining unit 110 may obtain files of the malware or non-malware from the optical disc 24, the memory device 25, or the memory card 27. The sample data obtaining unit 110 stores the obtained malware or non-malware in the storage unit 120 as sample data pieces 121a, 121b, ... to be used for the machine learning. The sample data obtaining unit 110 assigns a data attribute to the stored sample data pieces 121a, 121b, .... For example, when the sample data is the malware, the type of the malware such as a worm is assigned as the attribute. When the sample data is the non-malware, the attribute "non-malware" is assigned.

The storage unit 120 stores the sample data pieces 121a, 121b, .... The storage unit 120 stores learning data pieces 122a, 122b, ... generated by converting the sample data pieces 121a, 121b, .... For example, the attributes of the sample data of a conversion source are set as labels in the learning data pieces 122a, 122b, .... The storage unit 120 is realized by using, for example, part of a storage area of the memory 102 or the storage device 103 included in the computer 100.

The data conversion unit 130 converts the sample data pieces 121a, 121b, ... into the learning data pieces 122a, 122b, .... In so doing, the data conversion unit 130 performs conversion such that programs indicated in the sample data pieces 121a, 121b, ... are not executable and signatures included in the sample data pieces 121a, 121b, ... disappear. Each of the signatures is part of the code of the malware used for detecting the malware by the virus detection software. In the conversion of the sample data pieces 121a, 121b, ..., the data conversion unit 130 performs the conversion in such way in which the predetermined characteristics included in the sample data pieces 121a, 121b, ... are maintained. Examples of the predetermined characteristics include, for example, the Hamming distance between two of arbitrary bytes, the absolute value of the difference between numeric values represented by two arbitrary bytes, and the like.

The learning data output unit 140 transmits the learning data pieces 122a, 122b, ... stored in the storage unit 120 to the computer 200 for machine learning via the network 20, for example. When the computer 100 is separated from the network 20, the learning data output unit 140 writes the learning data to, for example, the optical disc 24, the memory device 25, or the memory card 27.

The computer 200 includes a virus detection unit 210, a learning data obtaining unit 220, a storage unit 230, and a machine learning unit 240.

The virus detection unit 210 detects a virus included in data input to the computer 200. For example, the virus detection unit 210 has a list of the signatures that are parts of the codes of the malware and detects the input data as the malware when the data includes a code that matches the signature. The virus detection unit 210 discards, for example, data detected as the malware without storing the data in the storage device or the like.

The learning data obtaining unit 220 obtains the learning data pieces 122a, 122b, ... generated by the computer 100 via the virus detection unit 210. The learning data obtaining unit 220 stores the obtained learning data pieces 122a, 122b, ... in the storage unit 230.

The storage unit 230 stores the learning data pieces 122a, 122b, .... The storage unit 230 is realized by using, for example, part of the storage area of the memory or the storage device included in the computer 200.

The machine learning unit 240 performs the machine learning by using the learning data pieces 122a, 122b, .... For example, the machine learning unit 240 uses the learning data pieces 122a, 122b, ... as input to a neural network and compares output of the neural network with the labels assigned to the learning data pieces 122a, 122b, .... When the output and the labels do not match, the machine learning unit 240 corrects the value of a weight parameter in the neural network so that the output and the labels match. The machine learning unit 240 outputs, as a learned model, such a neural network the output of which matches the labels with accuracy higher than or equal to a predetermined level.

The machine learning unit 240 transmits the learned model to, for example, the computers 301, 302, ... to be protected from the malware. The computers 301, 302, ... input data such as software input from the outside to the received model to infer whether the data is the malware. When the computers 301, 302, ... determine that the data is the malware, the computers 301, 302, ... discard the input data.

The functions of the individual elements illustrated in FIG. 5 may be realized by, for example, causing a computer to execute program modules corresponding to the elements.

In the system illustrated in FIG. 5, the computer 100 performs the data conversion on the malware. This improves the security of the machine learning in which the malware is used. In order not to affect the machine learning in the data conversion, it is important to appropriately replace the values in bytes. Hereinafter, an exemplary data replacement method will be described.

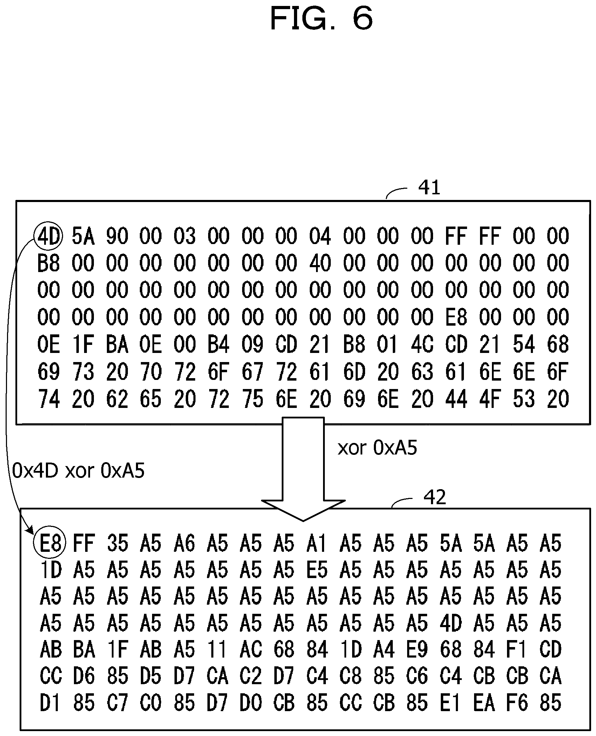

FIG. 6 illustrates a first example of data replacement in bytes. For example, the data conversion unit 130 performs a bit-by-bit exclusive OR operation (XOR) on each of the bytes in malware 41 and an arbitrary single byte value.

The data after the replacement of each of the bytes in the malware 41 is "$x_i$ xor KEY". This $x_i$ is a byte value existing in a file offset i of the malware 41. The i is an integer from zero to a value that is one less than the byte size of the malware 41. The KEY is an arbitrary single byte value and a fixed value. The KEY is an example of the bit string described according to the first embodiment.

When the exclusive OR operation is performed, the values of the bits in each of the bytes in the malware 41 are inverted (0 to 1 or 1 to 0) in the case where the values of the corresponding bits in the KEY are 1. For example, when the KEY is "A5" in hexadecimal notation, the byte value "4D" of the file offset 0 in the malware 41 is replaced with "E8". Results of the replacement of the bytes in the malware 41 with the exclusive OR between the byte and the KEY "A5" are post-replacement data 42.

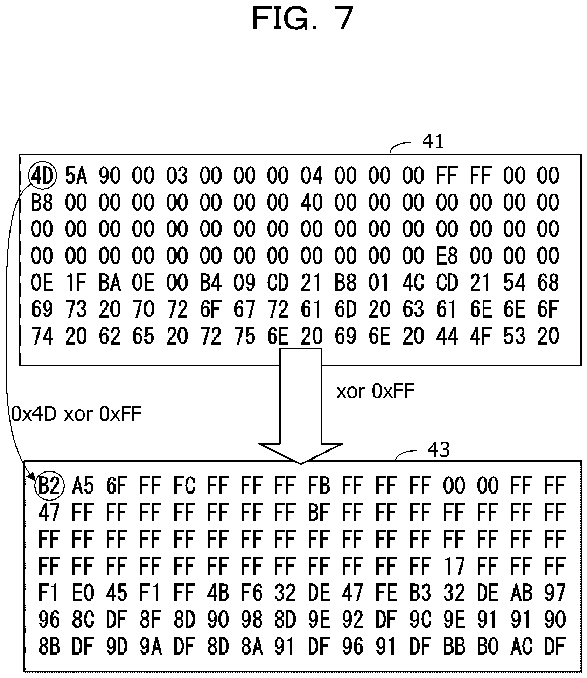

FIG. 7 illustrates a second example of the data replacement in bytes. The difference between the examples illustrated in FIG. 6 and FIG. 7 is that the value of the KEY is "FF" in hexadecimal notation in the example illustrated in FIG. 7. In this case, a byte value "4D" of the file offset 0 in the malware 41 is replaced with "B2". Results of the replacement of the bytes in the malware 41 with the exclusive OR between the byte and the KEY "FF" are post-replacement data 43. When the value of KEY is "FF", the values of all the bits in the malware 41 are inverted.

Next, the procedure of data replacement processing will be described in detail. The data replacement processing is also performed on software other than the malware (non-malware) in a similar manner.

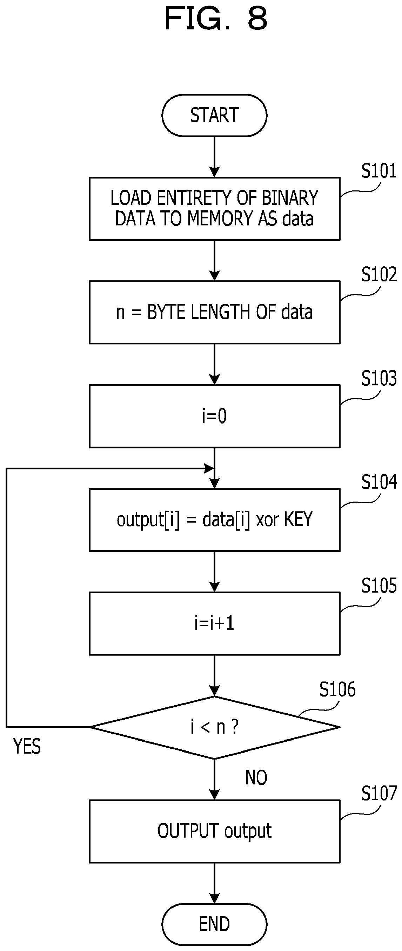

FIG. 8 is a flowchart illustrating an example of the procedure of the data replacement processing. Hereinafter, the processing illustrated in FIG. 8 will be described by following step numbers.

[Step S101] The data conversion unit 130 loads the entirety of the binary data of the malware or non-malware to the memory 102 as the data name "data".

[Step S102] The data conversion unit 130 sets a value indicating the byte length of "data" to a variable n (n = byte length of data).

[Step S103] The data conversion unit 130 initializes, to 0, a variable i indicating the file offset of the byte to be replaced (i = 0).

[Step S104] The data conversion unit 130 sets, to the value of the byte of the file offset "i" of a data name "output", an operational result of the bit-by-bit exclusive OR between data [i] and the KEY (output [i] = data [i] xor KEY).

[Step S105] The data conversion unit 130 increments the variable i (i = i + 1).

[Step S106] The data conversion unit 130 determines whether the value of the variable i is smaller than n (i < n?). When the value of the variable i is smaller than n, the data conversion unit 130 causes the processing to proceed to step S104. When the value of the variable i reaches n, the data conversion unit 130 causes the processing to proceed to step S107.

[Step S107] The data conversion unit 130 outputs the entirety of the data having the data name of "output". The data output as "output" is the post-replacement data.

In this way, the replacement of the binary data in bytes is performed. The post-replacement data generated by the replacement is converted into, for example, grayscale image data and stored as the learning data.

When the data replacement processing is performed on the malware, plaintext of the malware is not loaded in the memory or the storage device of the computer 100 or the computer 200 after the data replacement processing has been performed. The post-replacement data having undergone the replacement in bytes does not function as the program of the malware. Accordingly, the risk of erroneous execution of the malware is reduced.

The signature disappears due to the data replacement processing in bytes. Accordingly, discarding, by the antivirus software, of the learning data generated based on the malware is also suppressed.

Since the data in bytes is replaced by the exclusive OR between arbitrary single-byte bit strings, the Hamming distance between two arbitrary bytes does not change before and after the replacement. The Hamming distance between two bytes is the number of bits having different values when corresponding bits of two bytes (bits at the same position in order in the bit strings) are compared. The Hamming distance between two bytes in the malware represents a characteristic of the malware.

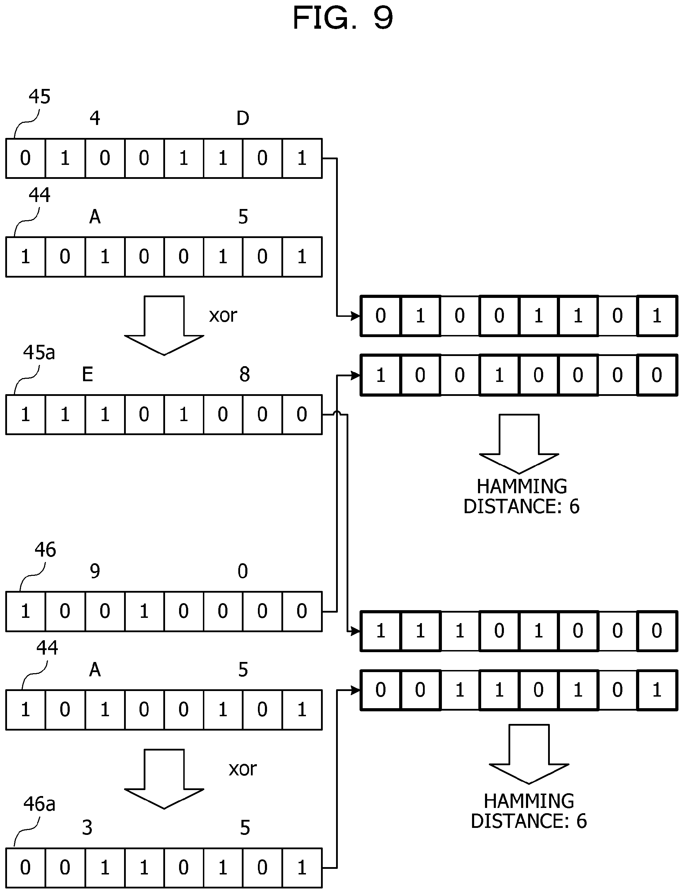

FIG. 9 illustrates a comparative example of the Hamming distance before and after the replacement. In the example illustrated in FIG. 9, a KEY 44 is "A5". At this time, when a byte value 45 of the replacement source is "4D", the byte value is converted into a byte value 45a of "E8" by the exclusive OR with "A5". When a byte value 46 of the replacement source is "90", the byte value is converted into a byte value 46a of "35" by the exclusive OR with "A5".

When two byte values 45 and 46 of the replacement source are compared, six bits among the corresponding bits are different. Thus, the Hamming distance between the byte values 45 and 46 is six. When two byte values 45a and 46a after the replacement are compared, six bits among the corresponding bits are different. Thus, the Hamming distance between the byte values 45a and 46a is also six. When the replacement is performed by the exclusive OR as described above, the Hamming distance is maintained.

For example, the characteristic of the malware represented by the Hamming distance between bytes is maintained even after the data replacement. When the computer 200 performs the machine learning that handles data as byte strings, the characteristic represented by the Hamming distance between bytes may be effectively used for classification of the malware or determination of benignity/maliciousness. For example, the Hamming distance of a byte code pair is small in the case where the byte conde pair represents similar instruction strings. The Hamming distance of a byte code pair is large in the case where the byte conde pair represents dissimilar instruction strings. Accordingly, since the Hamming distance is maintained even after the data replacement, the machine learning based on similarity between instruction strings may be appropriately performed even when the post-replacement data is used as the learning data.

When the KEY is "FF" as illustrated in FIG. 7, the absolute value of the difference in value between two arbitrary bytes does not change. The difference in value between two bytes is a difference in numeric value between two bytes when the value of each byte is interpreted as a numeric value.

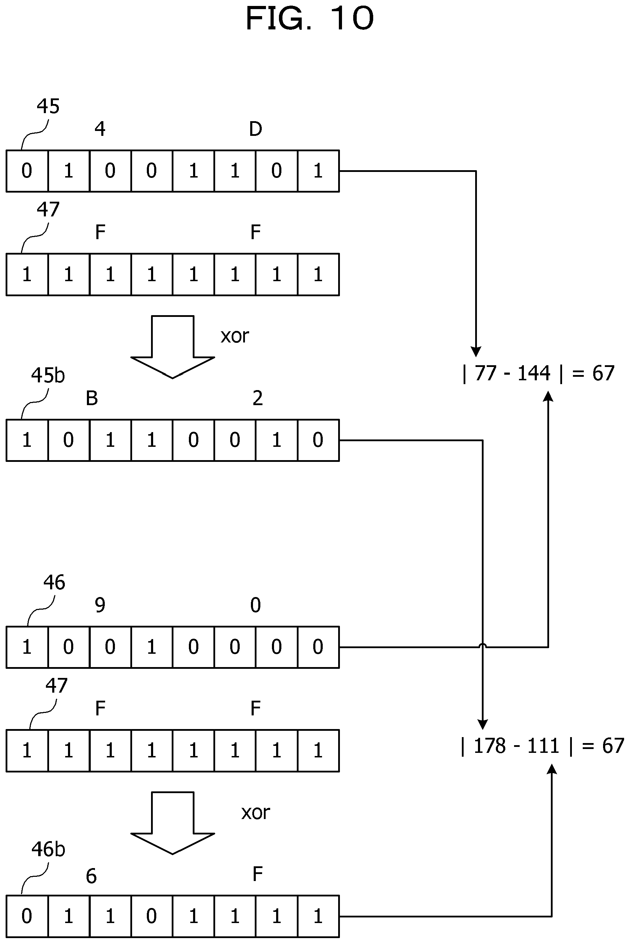

FIG. 10 illustrates a comparative example of an absolute value of differences in value between two arbitrary bytes before and after the replacement. In the example illustrated in FIG. 10, a KEY 47 is "FF". At this time, when the byte value 45 of the replacement source is "4D", the byte value is converted into a byte value 45b of "B2" by the exclusive OR with "FF". When the byte value 46 of the replacement source is "90", the byte value is converted into a byte value 46b of "6F" by the exclusive OR with "FF".

When the byte value 45 of the replacement source is converted into a decimal value, "77" is obtained. When the byte value 46 of the replacement source is converted into a decimal value, "144" is obtained. The absolute value of the difference between two byte values 45 and 46 is "67". When the post-replacement byte value 45b is converted into a decimal value, "178" is obtained. When the post-replacement byte value 46b is converted into a decimal value, "111" is obtained. Thus, the absolute value of the difference between two byte values 45b and 46b is also "67".

As described above, when the replacement by the exclusive OR is performed with the KEY set to "FF", the absolute value of the difference between the byte values is maintained. Accordingly, when the KEY is set to "FF", the generated learning data may be effectively used in the machine learning in which the difference between two bytes is used.

When the KEY is "FF", also in the case where the characteristics of the malware are extracted by emphasizing and imaging the ASCII printable character range, the characteristics of the malware may be maintained.

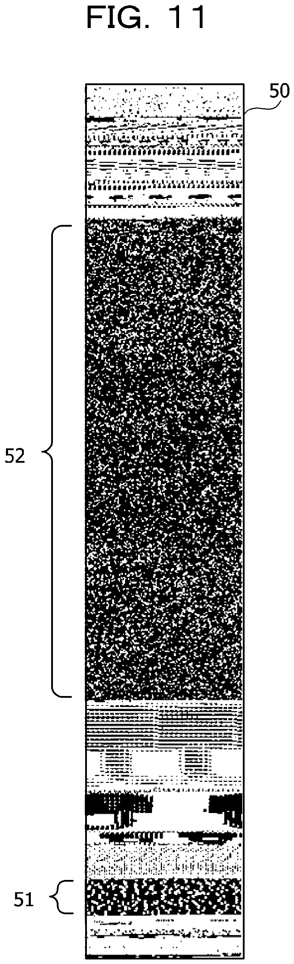

FIG. 11 illustrates an example of imaged binary data. In the example illustrated in FIG. 11, it is assumed that each of the bytes in binary data 50 is displayed in a color corresponding to a range to which the value of the byte belongs. For example, when the ASCII printable character range (0x20 to 0x7E) is highlighted in red, most of an area in which the character strings are closely described (character string area 51) is displayed in red. In contrast, most of an area in which machine language instruction strings are closely described (instruction string area 52) is displayed in a color other than red. At what position and in what size the character string area 51 exists in the binary data 50 may represent the characteristics of malware.

In the case where the data replacement is performed by the exclusive OR with the KEY set to "FF", when the definition of the ASCII printable character range (0x20 to 0x7E) is also replaced by the exclusive OR in a similar manner, a range corresponding to the ASCII printable character in the post-replacement data may be easily specified. Accordingly, the learning data based on the post-replacement data may be effectively used for the machine learning that classifies the malware or determines benignity/maliciousness by using the ASCII printable character range.

When the data replacement is performed by the exclusive OR with the KEY set to "FF", the ASCII printable characters are replaced with the arrangement of the characters maintained in a continuous range. However, order of the characters is reversed. In the case where the machine learning is performed by regarding the ASCII printable character range and the arrangement of the characters in the malware as the characteristics, when the data is replaced by the exclusive OR with the KEY set to "FF", the post-replacement data may be effectively used for such machine learning.

[Third Embodiment]

Next, a third embodiment is described. According to the third embodiment, the ASCII printable character range is replaced with 95 continuous ranges in length (for example, 0x00 to 0x5E), and the other bytes are replaced with other ranges. Hereinafter, different points of the third embodiment from those of the second embodiment will be described.

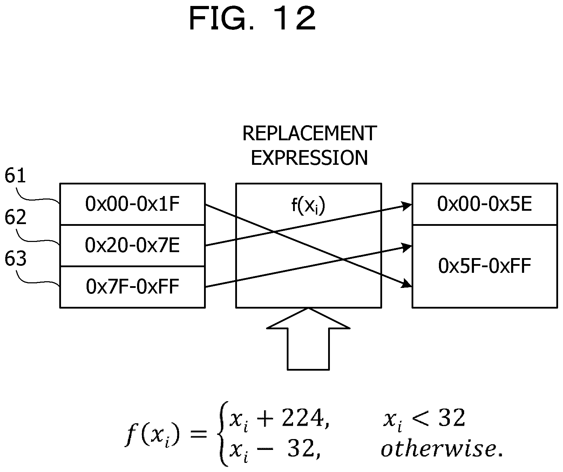

FIG. 12 illustrates an example of a method of replacement of the ASCII printable character range. As illustrated in FIG. 12, a code range represented by bytes 0x00 to 0xFF is divided into three code ranges 61, 62, 63 which are respectively 0x00 to 0x1F, 0x20 to 0x7E, and 0x7F to 0xFF such that the ASCII printable range is set at the center. The code range 62 is the ASCII printable range.

The data conversion unit 130 defines a replacement expression $f(x_i)$ as described below.

$$f(x_i) = \begin{cases} x_i + 224, & x_i < 32 \\ x_i - 32, & otherwise. \end{cases}$$

$$\dots 1$$

According to expression 1, each of the bytes having a value in the code range 61 has a value of $x_i < 32$ (32 = 0x20), 224 is added to this value, and the resulting value is converted into a value in a range from 0xE0 to 0xFF. Each of the bytes having a value in the code range 62 has a value of $x_i \geq 32$, 32 is subtracted from this value, and the resulting value is converted into a value in a range from 0x00 to 0x5E. Each of the bytes having a value in the code range 63 has a value of $x_i < 32$ (32 = 0x20), 32 is subtracted from this value, and the resulting value is converted into a value in a range from 0x5F to 0xDF.

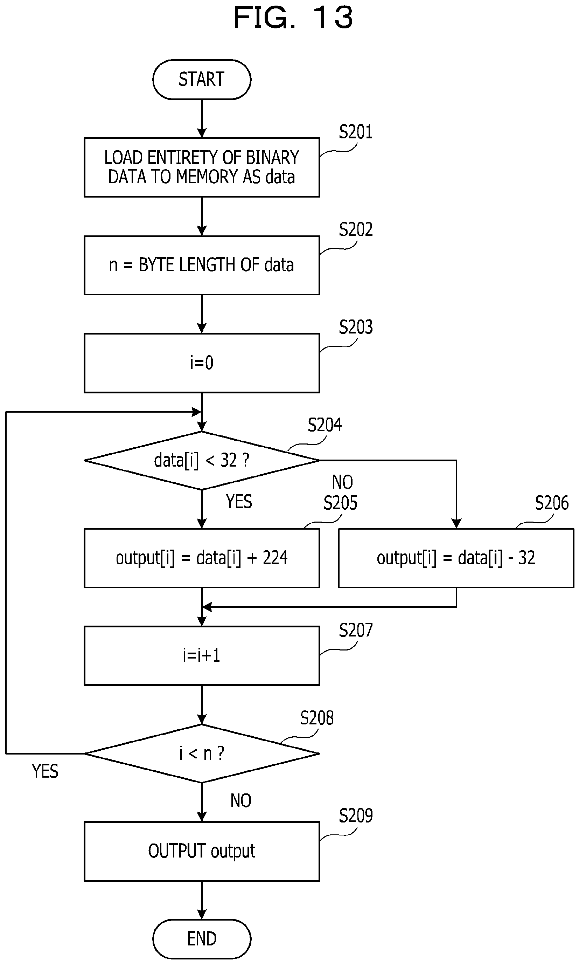

FIG. 13 is a flowchart illustrating an example of a replacement procedure of the ASCII printable character range. Processes of steps S201 to S203 and S207 to S209 out of processes illustrated in FIG. 13 are respectively similar to the processes of steps S101 to S103 and S105 to S107 of the processes according to the second embodiment illustrated in FIG. 8. Hereinafter, processes of steps S204 to S206 different from the processes illustrated in FIG. 8 will be described.

[Step S204] The data conversion unit 130 determines whether the value of the byte of the file offset "i" of the data name "data" is smaller than 32 in the decimal system. When this value of the byte is smaller than 32, the data conversion unit 130 causes the processing to proceed to step S205. When this value of the byte is greater than or equal to 32, the data conversion unit 130 causes the processing to proceed to step S206.

[Step S205] The data conversion unit 130 sets, to the value of the byte of the file offset "i" of the data name "output", a value obtained by adding 224 in the decimal system to the value of data [i] (output[i] = data[i] + 224). Then, the data conversion unit 130 causes the processing to proceed to step S207.

[Step S206] The data conversion unit 130 sets a value obtained by subtracting 32 in the decimal system to the value of data [i] from the value of the byte of the file offset [i] of the data name "output" (output[i] = data[i] - 32).

The processes in steps S204 to S206 are executed on all the bytes of the read binary data. As a result, the replacement of the ASCII printable character range is realized as illustrated in FIG. 12.

When the ASCII printable character range is replaced as described above, the replacement of the ASCII printable characters is performed with the arrangement of the characters in the continuous range maintained. In addition, the order is not reversed. The post-replacement data generated through such replacement is, for example, imaged with the ASCII printable character range emphasized. The imaged data is used as the learning data for the machine learning. Such learning data may be effectively used for the machine learning in which, for example, the position or range of an area occupied by the ASCII printable characters in the malware is used as the characteristics.

[Other Embodiments]

The data replacement methods in bytes for binary data described according to the second and third embodiments are merely exemplary. The computer 100 for malware conversion may use another replacement method as long as the characteristics used in the machine learning are able to be maintained.

Although imaging into a grayscale image or the like is performed after the data replacement for binary data in bytes has been performed according to the second and third embodiments, the computer 100 for malware conversion may use the post-replacement data as the learning data without performing the imaging.

The unit of the data replacement is not necessarily a byte. For example, the computer 100 for malware conversion may replace data in units of double bytes.

While the embodiments have been exemplified above, the configuration of each unit described in the embodiments may be replaced with another configuration having similar functions. Any other components or processes may be added. Two or more of the arbitrary configurations (characteristics) according to the above-described embodiments may be combined with each other.

All examples and conditional language provided herein are intended for the pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the scope of the invention.

**Claims**

1. A non-transitory computer-readable recording medium comprising an information processing program comprising instructions which,
   when the program is executed by a computer, cause the computer to perform processing, the processing comprising:

   generating post-replacement data (3) by replacing values, with other values, of individual unit data pieces, which have a predetermined data length, of malware (1, 31) in accordance with a replacement rule by which replacement is performed in bijective relationships on a unit data piece basis while a predetermined characteristic indicated in the malware is maintained; and
   generating, based on the post-replacement data, machine learning data to be used for machine learning in which the predetermined characteristic is used.

2. The non-transitory computer-readable recording medium according to claim 1, wherein,
   in the generating of the post-replacement data, for each of the unit data pieces of the malware, a bit-by-bit exclusive OR operation is performed on a bit string that has the predetermined data length and the unit data piece so as to replace the value of the unit data piece of the malware with the other value.

3. The non-transitory computer-readable recording medium according to claim 2, wherein
   values of all bits of the bit string are 1.

4. The non-transitory computer-readable recording medium according to claim 1, wherein,
   in the generating of the post-replacement data, a data length for a single character in a predetermined character code system is set as the predetermined data length, and values of character codes in a definition range of the predetermined character code system are replaced with values in another continuous range that has a size identical to a size of the definition range.

5. A computer-implemented method comprising:

generating post-replacement data (3) by replacing values, with other values, of individual unit data pieces, which have a predetermined data length, of malware (1, 31) in accordance with a replacement rule by which replacement is performed in bijective relationships on a unit data piece basis while a predetermined characteristic indicated in the malware is maintained; and
generating, based on the post-replacement data, machine learning data to be used for machine learning in which the predetermined characteristic is used.

6. An information processing device comprising a processor configured to perform processing, the processing comprising:

generating post-replacement data (3) by replacing values, with other values, of individual unit data pieces, which have a predetermined data length, of malware (1, 31) in accordance with a replacement rule by which replacement is performed in bijective relationships on a unit data piece basis while a predetermined characteristic indicated in the malware is maintained; and
generating, based on the post-replacement data, machine learning data to be used for machine learning in which the predetermined characteristic is used.

**Patentansprüche**

1. Nichtflüchtiges computerlesbares Speichermedium, umfassend ein Informationsverarbeitungsprogramm, das Anweisungen umfasst, die, wenn das Programm von einem Computer ausgeführt wird, veranlassen, dass der Computer Verarbeiten durchführt, wobei das Verarbeiten umfasst:

Erzeugen von Ersatznachfolgedaten (3) durch Ersetzen von Werten individueller Einheitsdatenelemente einer vorbestimmten Datenlänge von Malware (1, 31) durch andere Werte in Übereinstimmung mit einer Ersatzregel, gemäß der Ersetzen in bijektiven Beziehungen auf einer Einheitsdatenelementbasis durchgeführt wird, während ein vorbestimmtes, in der Malware angegebenes Merkmal beibehalten wird; und
Erzeugen, basierend auf den Ersatznachfolgedaten, von Maschinenlerndaten, die für Maschinenlernen zu verwenden sind, bei dem das vorbestimmte Merkmal verwendet wird.

2. Nichtflüchtiges computerlesbares Speichermedium, nach Anspruch 1, wobei
beim Erzeugen der Ersatznachfolgedaten für jedes der Einheitsdatenelemente der Malware eine Bit-für-Bit exklusive ODER-Operation an einem Bit-String, der die vorbestimmte Datenlänge aufweist, und dem Einheitsdatenelement durchgeführt wird, um so den Wert des Einheitsdatenelements der Malware durch den anderen Wert zu ersetzen.

3. Nichtflüchtiges computerlesbares Speichermedium, nach Anspruch 2, wobei Werte aller Bits des Bit-Strings 1 sind.

4. Nichtflüchtiges computerlesbares Speichermedium, nach Anspruch 1, wobei
beim Erzeugen der Ersatznachfolgedaten eine Datenlänge für ein einzelnes Zeichen in einem vorbestimmten Zeichencodesystem als die vorbestimmte Datenlänge eingestellt wird und Werte von Zeichencodes in einem Definitionsbereich des vorbestimmten Zeichencodesystems durch Werte in einem anderen durchgehenden Bereich ersetzt werden, der eine Größe aufweist, die identisch ist zu einer Größe des Definitionsbereichs.

5. Nichtflüchtiges computerlesbares Verfahren, umfassend:

Erzeugen von Ersatznachfolgedaten (3) durch Ersetzen von Werten individueller Einheitsdatenelemente einer vorbestimmten Datenlänge von Malware (1, 31) durch andere Werte in Übereinstimmung mit einer Ersatzregel, gemäß der Ersetzen in bijektiven Beziehungen auf einer Einheitsdatenelementbasis durchgeführt wird, während ein vorbestimmtes, in der Malware angegebenes Merkmal beibehalten wird; und
Erzeugen, basierend auf den Ersatznachfolgedaten, von Maschinenlerndaten, die für Maschinenlernen zu verwenden sind, bei dem das vorbestimmte Merkmal verwendet wird.

**6.** Informationsverarbeitungsvorrichtung, umfassend einen Prozessor, der konfiguriert ist, um Verarbeiten durchzuführen, wobei das Verarbeiten umfasst:

Erzeugen von Ersatznachfolgedaten (3) durch Ersetzen von Werten individueller Einheitsdatenelemente einer vorbestimmten Datenlänge von Malware (1, 31) durch andere Werte in Übereinstimmung mit einer Ersatzregel, gemäß der Ersetzen in bijektiven Beziehungen auf einer Einheitsdatenelementbasis durchgeführt wird, während ein vorbestimmtes, in der Malware angegebenes Merkmal beibehalten wird; und

Erzeugen, basierend auf den Ersatznachfolgedaten, von Maschinenlerndaten, die für Maschinenlernen zu verwenden sind, bei dem das vorbestimmte Merkmal verwendet wird.

**Revendications**

**1.** Support d'enregistrement non transitoire lisible par ordinateur comprenant un programme de traitement d'informations comprenant des instructions qui, quand le programme est exécuté par un ordinateur, amènent l'ordinateur à réaliser un traitement, le traitement comprenant :

la génération de données post-remplacement (3) en remplaçant des valeurs, par d'autres valeurs, d'éléments de données unitaires individuels, qui présentent une longueur de données prédéterminée, de logiciel malveillant (1,31) conformément à une règle de remplacement selon laquelle un remplacement est réalisé dans des relations bijectives sur une base d'élément de données unitaire alors qu'une caractéristique prédéterminée indiquée dans le logiciel malveillant est maintenue ; et

la génération, sur la base des données post-remplacement, de données d'apprentissage machine à utiliser pour un apprentissage machine dans lequel la caractéristique prédéterminée est utilisée.

**2.** Support d'enregistrement non transitoire lisible par ordinateur selon la revendication 1, dans lequel,
dans la génération des données post-remplacement, pour chacun des éléments de données unitaires du logiciel malveillant, une opération OU exclusif bit par bit est réalisée sur une chaîne de bits qui a la longueur de données prédéterminée et l'élément de données unitaire de manière à remplacer la valeur de l'élément de données unitaire du logiciel malveillant par l'autre valeur.

**3.** Support d'enregistrement non transitoire lisible par ordinateur selon la revendication 2, dans lequel
des valeurs de tous les bits dans la chaîne de bits sont 1.

**4.** Support d'enregistrement non transitoire lisible par ordinateur selon la revendication 1, dans lequel,
dans la génération des données post-remplacement, une longueur de données pour un unique caractère dans un système de code de caractère prédéterminé est fixée à la longueur de données prédéterminée, et des valeurs de codes de caractère dans une plage de définition du système de code de caractère prédéterminé sont remplacés par des valeurs dans une autre plage continue qui présente une taille identique à une taille de la plage de définition.

**5.** Procédé mis en œuvre par ordinateur comprenant :

la génération de données post-remplacement (3) en remplaçant des valeurs, par d'autres valeurs, d'éléments de données unitaires individuels, qui présentent une longueur de données prédéterminée, de logiciel malveillant (1,31) conformément à une règle de remplacement selon laquelle un remplacement est réalisé dans des relations bijectives sur une base d'élément de données unitaire alors qu'une caractéristique prédéterminée indiquée dans le logiciel malveillant est maintenue ; et

la génération, sur la base des données post-remplacement, de données d'apprentissage machine à utiliser pour un apprentissage machine dans lequel la caractéristique prédéterminée est utilisée.

**6.** Dispositif de traitement d'informations comprenant un processeur configuré pour réaliser un traitement, le traitement comprenant :

la génération de données post-remplacement (3) en remplaçant des valeurs, par d'autres valeurs, d'éléments de données unitaires individuels, qui présentent une longueur de données prédéterminée, de logiciel malveillant (1,31) conformément à une règle de remplacement selon laquelle un remplacement est réalisé dans des relations bijectives sur une base d'élément de données unitaire alors qu'une caractéristique prédéterminée indiquée dans le logiciel malveillant est maintenue ; et

**EP 3 985 536 B1**

la génération, sur la base des données post-remplacement, de données d'apprentissage machine à utiliser pour un apprentissage machine dans lequel la caractéristique prédéterminée est utilisée.

# FIG. 1

10

STORAGE UNIT 11

1

| 00 | 01 | 02 | 03 |
|----|----|----|----|
| 04 | 05 | 06 | 07 |
| 88 | 89 | 8A | 8B |
| 8C | 8D | 8E | 8F |

BIJECTION    PROCESSING UNIT 12

2

| FF | FE | FD | FC |
|----|----|----|----|
| FB | FA | F9 | F8 |
| 77 | 76 | 75 | 74 |
| 73 | 72 | 71 | 70 |

3

| POST-REPLACEMENT DATA | LABE:MALWARE |
|-----------------------|--------------|

MACHINE LEARNING DEVICE 4

# FIG. 2

COMPUTER (TO BE PROTECTED FROM MALWARE)

# FIG. 3

# FIG. 4

MALWARE
(BINARY DATA)

| 00 | 01 | 02 | 03 |
|----|----|----|----|
| 04 | 05 | 06 | 07 |
| 88 | 89 | 8A | 8B |
| 8C | 8D | 8E | 8F |

— 31

REPLACEMENT
(BIJECTION)

POST-REPLACEMENT
DATA

| FF | FE | FD | FC |
|----|----|----|----|
| FB | FA | F9 | F8 |
| 77 | 76 | 75 | 74 |
| 73 | 72 | 71 | 70 |

— 32

IMAGING

LEARNING DATA
(GRAYSCALE IMAGE)

— 33

# FIG. 5

# FIG. 6

41

⟨4D⟩ 5A 90 00 03 00 00 00 04 00 00 00 FF FF 00 00
B8 00 00 00 00 00 00 00 40 00 00 00 00 00 00 00
00 00 00 00 00 00 00 00 00 00 00 00 00 00 00 00
00 00 00 00 00 00 00 00 00 00 00 00 E8 00 00 00
0E 1F BA 0E 00 B4 09 CD 21 B8 01 4C CD 21 54 68
69 73 20 70 72 6F 67 72 61 6D 20 63 61 6E 6E 6F
74 20 62 65 20 72 75 6E 20 69 6E 20 44 4F 53 20

xor 0xA5

0x4D xor 0xA5

42

⟨E8⟩ FF 35 A5 A6 A5 A5 A5 A1 A5 A5 A5 5A 5A A5 A5
1D A5 A5 A5 A5 A5 A5 A5 E5 A5 A5 A5 A5 A5 A5 A5
A5 A5 A5 A5 A5 A5 A5 A5 A5 A5 A5 A5 A5 A5 A5 A5
A5 A5 A5 A5 A5 A5 A5 A5 A5 A5 A5 A5 4D A5 A5 A5
AB BA 1F AB A5 11 AC 68 84 1D A4 E9 68 84 F1 CD
CC D6 85 D5 D7 CA C2 D7 C4 C8 85 C6 C4 CB CB CA
D1 85 C7 C0 85 D7 D0 CB 85 CC CB 85 E1 EA F6 85

# FIG. 7

41

| (4D) | 5A | 90 | 00 | 03 | 00 | 00 | 00 | 04 | 00 | 00 | 00 | FF | FF | 00 | 00 |
| B8 | 00 | 00 | 00 | 00 | 00 | 00 | 00 | 40 | 00 | 00 | 00 | 00 | 00 | 00 | 00 |
| 00 | 00 | 00 | 00 | 00 | 00 | 00 | 00 | 00 | 00 | 00 | 00 | 00 | 00 | 00 | 00 |
| 00 | 00 | 00 | 00 | 00 | 00 | 00 | 00 | 00 | 00 | 00 | 00 | E8 | 00 | 00 | 00 |
| 0E | 1F | BA | 0E | 00 | B4 | 09 | CD | 21 | B8 | 01 | 4C | CD | 21 | 54 | 68 |
| 69 | 73 | 20 | 70 | 72 | 6F | 67 | 72 | 61 | 6D | 20 | 63 | 61 | 6E | 6E | 6F |
| 74 | 20 | 62 | 65 | 20 | 72 | 75 | 6E | 20 | 69 | 6E | 20 | 44 | 4F | 53 | 20 |

0x4D xor 0xFF

xor 0xFF

43

| (B2) | A5 | 6F | FF | FC | FF | FF | FF | FB | FF | FF | FF | 00 | 00 | FF | FF |
| 47 | FF | FF | FF | FF | FF | FF | FF | BF | FF | FF | FF | FF | FF | FF | FF |
| FF | FF | FF | FF | FF | FF | FF | FF | FF | FF | FF | FF | FF | FF | FF | FF |
| FF | FF | FF | FF | FF | FF | FF | FF | FF | FF | FF | FF | 17 | FF | FF | FF |
| F1 | E0 | 45 | F1 | FF | 4B | F6 | 32 | DE | 47 | FE | B3 | 32 | DE | AB | 97 |
| 96 | 8C | DF | 8F | 8D | 90 | 98 | 8D | 9E | 92 | DF | 9C | 9E | 91 | 91 | 90 |
| 8B | DF | 9D | 9A | DF | 8D | 8A | 91 | DF | 96 | 91 | DF | BB | B0 | AC | DF |

# FIG. 8

```
                    ┌──────────┐
                    │  START   │
                    └────┬─────┘
                         │
                         ▼
        ┌────────────────────────────────┐      S101
        │  LOAD ENTIRETY OF BINARY       │
        │  DATA TO MEMORY AS data        │
        └────────────────┬───────────────┘
                         │
                         ▼
        ┌────────────────────────────────┐      S102
        │     n = BYTE LENGTH OF data     │
        └────────────────┬───────────────┘
                         │
                         ▼
        ┌────────────────────────────────┐      S103
        │             i=0                 │
        └────────────────┬───────────────┘
                         │
                         ▼
        ┌────────────────────────────────┐      S104
        │   output[i] = data[i] xor KEY   │
        └────────────────┬───────────────┘
                         │
                         ▼
        ┌────────────────────────────────┐      S105
        │            i=i+1                │
        └────────────────┬───────────────┘
                         │
                         ▼
                  ◇ i < n ?  ◇                    S106
         YES              │  NO
                         ▼
        ┌────────────────────────────────┐      S107
        │         OUTPUT output           │
        └────────────────┬───────────────┘
                         │
                         ▼
                    ┌──────────┐
                    │   END    │
                    └──────────┘
```

# FIG. 9

45
4        D

| 0 | 1 | 0 | 0 | 1 | 1 | 0 | 1 |

44
A        5

| 1 | 0 | 1 | 0 | 0 | 1 | 0 | 1 |

xor

| 0 | 1 | 0 | 0 | 1 | 1 | 0 | 1 |

45a
E        8

| 1 | 1 | 1 | 0 | 1 | 0 | 0 | 0 |

| 1 | 0 | 0 | 1 | 0 | 0 | 0 | 0 |

HAMMING
DISTANCE: 6

46
9        0

| 1 | 0 | 0 | 1 | 0 | 0 | 0 | 0 |

| 1 | 1 | 1 | 0 | 1 | 0 | 0 | 0 |

44
A        5

| 1 | 0 | 1 | 0 | 0 | 1 | 0 | 1 |

| 0 | 0 | 1 | 1 | 0 | 1 | 0 | 1 |

xor

HAMMING
DISTANCE: 6

46a
3        5

| 0 | 0 | 1 | 1 | 0 | 1 | 0 | 1 |

# FIG. 10

# FIG. 11

# FIG. 12

REPLACEMENT
EXPRESSION

61

62

63

| 0x00-0x1F | f(x$_i$) | 0x00-0x5E |
| 0x20-0x7E | | 0x5F-0xFF |
| 0x7F-0xFF | | |

$$f(x_i) = \begin{cases} x_i + 224, & x_i < 32 \\ x_i - 32, & otherwise. \end{cases}$$

# FIG. 13

START

LOAD ENTIRETY OF BINARY
DATA TO MEMORY AS data — S201

n = BYTE LENGTH OF data — S202

i=0 — S203

data[i] < 32 ? — S204

YES

NO
S205

output[i] = data[i] + 224 — S205

output[i] = data[i] - 32 — S206

i=i+1 — S207

i < n ? — S208

YES

NO

OUTPUT output — S209

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020152845 A
- JP 2019213182 A
- JP 2016038721 A

**Non-patent literature cited in the description**

- Yes, Machine Learning Can Be More Secure! A Case Study on Android Malware Detection. **DEMONTIS AMBRA et al.** IEEE TRANSACTIONS ON DEPENDABLE AND SECURE COMPUTING. IEEE SERVICE CENTER, 01 July 2019, vol. 16, 711-724
- Methods and Approaches for Privacy-Preserving Machine Learning : Proceedings of ITR 2019. **LISIN N. et al.** Mechanisms, Transmissions and Applications. Erwin-Christian Lovasz, 01 January 2020
- Efficient Private Machine Learning by Differentiable Random Transformations. **FEI ZHENG.** ARXIV.ORG. CORNELL UNIVERSITY LIBRARY, 201 OLIN LIBRARY CORNELL UNIVERSITY, 18 August 2020